(19) Europäisches Patentamt
European Patent Office
Office européen des brevets

(11) **EP 3 635 377 B1**

(12) **FASCICULE DE BREVET EUROPEEN**

(45) Date de publication et mention
de la délivrance du brevet:
**02.08.2023 Bulletin 2023/31**

(21) Numéro de dépôt: **18728176.1**

(22) Date de dépôt: **07.06.2018**

(51) Classification Internationale des Brevets (IPC):
***G01N 23/087*** (2018.01)

(52) Classification Coopérative des Brevets (CPC):
**G01N 23/087;** G01N 2223/303; G01N 2223/423

(86) Numéro de dépôt international:
**PCT/EP2018/064974**

(87) Numéro de publication internationale:
**WO 2018/224580 (13.12.2018 Gazette 2018/50)**

(54) **PROCÉDÉ DE DÉTERMINATION DE PROPRIÉTÉS PHYSIQUES D'UN ÉCHANTILLON**

VERFAHREN ZUR BESTIMMUNG PHYSIKALISCHER EIGENSCHAFTEN EINER PROBE

METHOD FOR DETERMINING PHYSICAL PROPERTIES OF A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2017 FR 1755035**

(43) Date de publication de la demande:
**15.04.2020 Bulletin 2020/16**

(73) Titulaire: **Detection Technology SAS**
**38430 Moirans (FR)**

(72) Inventeurs:
• **GABORIEAU BORISSENKO, Elena**
**38430 Moirans (FR)**
• **PERION, Didier**
**38430 Moirans (FR)**

(74) Mandataire: **Papula Oy**
**P.O. Box 981**
**00101 Helsinki (FI)**

(56) Documents cités:
**WO-A1-2015/091083      WO-A1-2017/006059**
**US-A1- 2007 183 568**

• **PERION DIDIER ET AL: "Material discrimination and imaging improvement using high count rate X-ray spectrometric detector for non-destructive testing and security applications", 2016 IEEE NUCLEAR SCIENCE SYMPOSIUM, MEDICAL IMAGING CONFERENCE AND ROOM-TEMPERATURE SEMICONDUCTOR DETECTOR WORKSHOP (NSS/MIC/RTSD), IEEE, 29 octobre 2016 (2016-10-29), pages 1-7, XP033228414, DOI: 10.1109/NSSMIC.2016.8069961**

**Description**

L'invention se rapporte au domaine de l'analyse de matériaux par rayons ionisants, notamment X ou gamma.

Les applications des rayonnements X ou gamma se sont développées dans le domaine du contrôle non destructif et dans la sécurité par exemple pour la détection de matériaux explosifs. Dans le domaine du contrôle non destructif quelques applications ont été développées par exemple pour déterminer le taux de gras dans une viande.

Pour de telles applications, des mesures multi-énergies sont réalisées. Plus précisément, l'objet à analyser est disposé entre une source du spectre polychromatique et un détecteur multi énergies. Ce détecteur multi énergies est par exemple un détecteur spectrométrique ou détecteur à scintillation associé à plusieurs filtres définissant différentes bandes d'énergie.

Par exemple à partir de deux bandes d'énergie on peut mesurer des coefficients d'atténuation du rayonnement incident pour chacune des bandes d'énergie. On utilise des matériaux de référence permettant de définir une base de comparaison de coefficients d'atténuation. Ensuite, les coefficients d'atténuation d'un matériau à tester permettent de le positionner dans cette base de comparaison afin de retrouver des propriétés du matériau à tester, comme par exemple son taux de gras.

Plus précisément, la transmission d'un objet caractérise la quantité de photons qui le traverse sans interaction, mathématiquement, c'est donc le rapport entre le flux de photons après l'objet et le flux de photons avant l'objet dans une bande d'énergie donnée.

L'identification des matériaux par radiographie est liée à la manière par laquelle les matériaux interagissent avec les rayons X ou gamma. La probabilité d'absorption (ou la section efficace d'interaction) des rayons X ou gamma par un matériau dépend de son nombre atomique effectif ($Z_{eff}$) et de l'énergie des rayons X ou gamma. Le nombre atomique effectif reflète le nombre d'électrons dans le nuage électronique interagissant avec les rayons X ou gamma. Dans le cas d'un élément chimique pur (carbone, fer, or...), le nombre atomique effectif est égale au nombre atomique Z de l'élément chimique ($Z_{eff}$ = Z). Dans le cas d'un composé, le nombre atomique effectif s'approxime par le nombre moyen d'électrons par unité de volume.

Chaque matériau est caractérisé par son propre spectre d'atténuation. Un spectre d'atténuation est une fonction décrivant la probabilité d'interaction d'un photon avec le matériau en fonction de l'énergie du photon. Fondamentalement, trois phénomènes physiques ont été identifiés pour montrer l'interaction entre les rayons X ou gamma et la matière : l'effet photoélectrique, la diffusion Rayleigh ou élastique et la diffusion Compton ou inélastique. Dans ces trois phénomènes le nombre atomique et l'énergie des photons X interviennent à différentes puissance.

L'identification d'un matériau consiste à caractériser ce matériau par une ou des propriétés physiques comme, par exemple, le numéro atomique effectifs $Z_{eff}$, la densité, la teneur (ou pourcentage) d'un matériau dans un autre.

Au moyen des procédés connus, comme par exemple décrit dans le document US 2013/0110438 A1, il est possible de déterminer, pour un échantillon à tester, comment se décompose la mesure multi énergie faite sur cet échantillon. Sur une base de plus de 2 matériaux, le résultat sera toujours une distribution de probabilité ne prenant en compte que les deux matériaux dont les mesures encadrent la mesure de l'échantillon à tester. Cette méthode peut donc fonctionner pour la mesure du taux de gras par exemple mais pas pour trouver un numéro atomique effectif parmi un grand nombre de matériaux.

Par ailleurs, pour un matériau donné, l'atténuation est fonction de l'épaisseur de l'échantillon utilisé. Plus son épaisseur est importante, plus l'atténuation est forte. Les procédés connus sont très mal adaptés à ce paramètre et pour reconnaitre un matériau il est généralement requis d'utiliser des échantillons d'épaisseur prédéterminée. Cette contrainte n'est pas adaptée dans le contrôle de bagage où par nature, les dimensions des objets à contrôler sont inconnues.

D'autres procédés de détermination de propriétés physiques par spectrométrie des rayons X sont décrits dans WO 2017/006059 A1 et WO 2015/091083 A1.

L'invention vise à pallier tout ou partie des problèmes cités plus haut en proposant un nouveau procédé de détermination de propriétés physiques d'un échantillon au moyen d'un détecteur spectrométrique pouvant s'adapter à toute épaisseur d'échantillon. L'invention vise également à améliorer la précision de la détermination, par exemple quant il s'agit de rechercher une proportion d'un matériau dans un autre.

L'invention est définie dans les revendications.

L'invention sera mieux comprise et d'autres avantages apparaîtront à la lecture de la description détaillée d'un mode de réalisation donné à titre d'exemple, description illustrée par le dessin joint dans lequel :

la figure 1 représente un exemple de système permettant la détection de matériaux particulier dans des bagages ;
la figure 2 illustre un procédé selon l'invention pouvant être mis en oeuvre dans le système de la figure 1 ;
la figure 3 illustre un procédé de calibration du système de la figure 1 ;
la figure 4 illustre l'adaptation selon l'invention au moyen d'échantillons de référence scannés avec un échantillon à tester ;

les figures 5 et 6 précisent deux modes de réalisation de l'adaptation illustrée à la figure 4.

Par souci de clarté, les mêmes éléments porteront les mêmes repères dans les différentes figures.

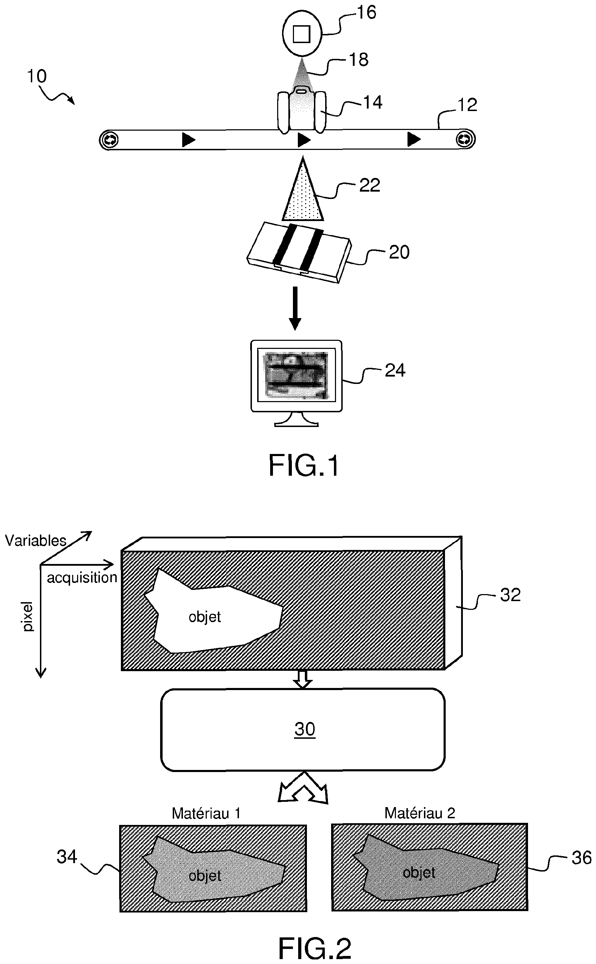

La figure 1 représente un exemple de système 10 de contrôle de bagage pouvant par exemple être mis en oeuvre dans un aéroport. Le système 10 est prévu pour détecter des matériaux réputés dangereux comme par exemple des matériaux explosifs. Le système 10 comprend un tapis roulant 12 sur lequel se déplacent des bagages 14 à contrôler. Un générateur de rayonnement X 16 est disposé d'un coté d'une zone où le bagage 14 circule sur le tapis roulant 12. L'invention peut être mise en oeuvre pour d'autres types de rayonnements ionisants comme les rayonnements gamma. Le générateur 16 émet un rayonnement incident 18 qui traverse le bagage 14. Un détecteur 20 est disposé d'un autre coté de la zone afin de recevoir le rayonnement 18 altéré par la traversée du bagage 14. Le rayonnement altéré, appelé rayonnement transmis, porte la référence 22. Le détecteur est relié à un calculateur 24 configuré pour analyser des informations issues du détecteur 20 et pour afficher une image représentative du contenu du bagage 14. Sur cette image les matériaux contenus dans le bagage 14 sont identifiés. Il est possible de disposer les composants du système 10 différemment afin d'éviter au rayonnement de traverser le tapis roulant 12.

Il est bien entendu que l'invention peut être appliquée dans d'autres domaines où l'on souhaite identifier des matériaux comme par exemple l'identification d'un nombre atomique ou plus généralement des propriétés physiques d'échantillons à tester. Il est par exemple possible de mettre en oeuvre l'invention pour déterminer la teneur d'une matière contenue dans un autre type de matière comme par exemple le taux de gras d'une viande.

Les propriétés sont retrouvées au moyen de l'analyse des rayonnements X ou gamma transmis ou réfléchi. Par la suite un modèle d'analyse de rayonnements transmis est décrit. Il est possible d'adapter ce modèle à l'analyse de rayonnement réfléchis.

De façon plus générale, un échantillon à tester est soumis à un rayonnement ionisant (rayons X ou gamma) 16. Le calculateur 24 détermine des propriétés physiques de matériaux contenus dans l'échantillon à tester en fonction de l'atténuation du rayonnement ionisant traversant l'échantillon à tester. Le générateur 16 est configuré pour émettre un rayonnement dans une plage d'énergie étendue. Ce type de rayonnement est appelé poly chromatique. A titre d'exemple, il possible d'utiliser un rayonnement X dans une gamme d'énergie de 20 à 200 keV.

Le détecteur 20 est configuré pour discerner l'énergie des photons reçus. Autrement dit, le détecteur 20 est un détecteur spectrométrique possédant plusieurs canaux, chaque canal permettant de mesurer la quantité de rayonnement reçu dans une bande d'énergie donnée, les différentes bandes d'énergie pouvant être distinctes ou superposées. Il est possible de mettre en oeuvre un détecteur à scintillation multi énergie. Ce type de détecteur dispose de plusieurs scintillateurs chacun sensible à une bande d'énergie donnée. Associé à chaque scintillateur, le détecteur comprend une chaîne de traitement permettant de filtrer et de mettre en forme le signal issu de chaque scintillateur. Le détecteur à scintillation fonctionne en mode intégration et mesure un signal fonction de la moyenne de l'énergie déposée par les photons, ce qui rend cette mesure sensible à l'effet de durcissement du spectre. L'effet du durcissement varie en fonction de la nature et de l'épaisseur des matériaux traversés, il augmente le bruit et complique l'analyse.

Alternativement, il est possible de mettre en oeuvre un détecteur spectrométrique permettant de détecter chaque photon individuel, et de le quantifier en énergie, afin de faire une classification de ces photons dans un histogramme pour construire un spectre en énergie. La détection des photons X est faite par un détecteur qui convertit l'énergie déposée par les photons incidents en signal électrique. Un tel détecteur comprend par exemple un cristal configuré pour transformer l'énergie reçu d'un photon en paquets de charges, mesurés par un amplificateur de charge.

Pour mettre en oeuvre l'invention le détecteur 20 possède au moins trois canaux. Des essais ont été réalisés avec succès en utilisant un détecteur spectrométrique à 64 canaux.

A partir des mesures réalisées dans chaque canal, on calcule des variables, chacune formée d'une combinaison de mesures de différents canaux. Ces combinaisons peuvent être de toute nature, comme des additions ou soustraction de mesure faites dans plusieurs canaux. D'autres opérateurs entre canaux peuvent être utilisés pour réaliser les combinaisons, comme par exemple des multiplications ou divisions, des puissances...

Le tableau (1) donne un exemple de huit variables notées V1 à V8 obtenues à l'aide de sommes notées S et de rapport entre des sommes de mesures réalisés dans des canaux numérotés de 1 à 55. Par exemple la variable V1 est formée de la somme des mesures réalisées dans les canaux 2 à 7.

Tableau (1)

| Nom Variable | Formule à utiliser |
|---|---|
| V1 | S(2,7) |
| V2 | S(2,10) |
| V3 | S(2,15) |

(suite)

| Nom Variable | Formule à utiliser |
|---|---|
| V4 | S(2,17) |
| V5 | S(9,16) |
| V6 | S(20,26) |
| V7 | S(27,55) |
| V8 | S(27,55)/S(2,17) |

Il est possible de normaliser les mesures de chacun des canaux. Plus précisément la normalisation peut être réalisée en divisant la valeur mesurée du flux de photons ayant traversés l'échantillon à tester par la valeur mesurée du même flux de photons n'ayant pas traversés d'échantillon. Alternativement, il est possible de conserver les valeurs mesurées dans chacun des canaux sans les normaliser.

Pour simplifier les calculs, il est possible de réaliser la normalisation avec le calcul des variables par exemple en utilisant l'équation 1 suivante pour une somme S :

$$S(d,f) = -ln \frac{\sum_d^f Nc}{\sum_d^f N0_c} \qquad \text{(Equation 1)}$$

- d et f représentent le n° du canal de début et le n° du canal de fin dans la somme.
- $N0_c$ représente le nombre de photons du rayonnement incident reçu par le détecteur dans le canal c. $N0_c$, ou mesure à vide, peut être mesuré par le détecteur en l'absence d'échantillon.
- $N_c$, ou mesure utile, représente le nombre de photons du rayonnement transmis après passage au travers de l'échantillon à tester dans le même canal c.

Dans l'équation 1, l'utilisation d'un logarithme n'est pas obligatoire. Le logarithme permet cependant de s'approcher d'une variation linéaire des variables en fonction de l'épaisseur de l'échantillon à tester. En effet, l'atténuation en transmission se rapproche d'une fonction exponentielle de l'épaisseur.

Dans un système tel que décrit à l'aide de la figure 1, les mesures s'enchainent selon une direction d'acquisition donnée par le défilement du tapis roulant 12. Le détecteur 20 est un détecteur linéaire. Il est formé de pixels sensibles au rayonnement transmis 22. Les pixels du détecteur 20 s'étendent par exemple perpendiculairement à la direction d'acquisition. L'invention peut être mise en oeuvre avec d'autres formes de détecteurs. Les détecteurs linéaires peuvent s'étendre selon un arc de cercle ou selon toute autre forme de ligne, notamment pour tenir compte des formes de l'échantillon à tester ou d'une direction d'acquisition qui peut être linéaire ou angulaire. Il est également possible d'utiliser un détecteur dont les pixels sensibles s'étendent en deux dimensions. Par exemple, la première dimension du détecteur s'étend perpendiculairement à la direction de défilement du tapis roulant 12 et la seconde dimension du détecteur s'étend selon la direction de défilement du tapis roulant 12.

La mesure du flux de photons incident 18 par le détecteur 20 ou mesure à vide peut se faire aux moyens de pixels latéraux du détecteur 20 recevant le flux de photons sans traverser le bagage 14. Il est également possible de mesurer le flux de photons incident par le détecteur 20 avant que le bagage 14 n'atteigne la zone traversée par ce flux et/ou après que le bagage 14 ait quitté cette zone. La mesure du flux de photon incident 18 et la mesure du flux de photon transmis 22 ou mesure utile sont réalisées par le même détecteur 20 dans les mêmes conditions d'environnement. Plus précisément, lors de l'utilisation, le générateur de rayonnement X 16 peut évoluer en température et le flux de photon qu'il produit peut varier. De même le détecteur 20 peut lui aussi délivrer une meure de flux susceptible de varier notamment avec la température. Le fait de réaliser les mesures des flux 18 et 22 dans les mêmes conditions d'environnement permet de se prémunir de toute variation dans le calcul des valeurs. La correction de la mesure utile en utilisant la mesure à vide peut se faire lors de la normalisation comme par exemple décrit à l'aide de l'équation 1 dans laquelle $N0_c$ représente la mesure à vide et $N_c$ la mesure utile.

Après calcul des variables normalisées éventuellement, on applique aux variables une matrice 30 de pondération et de biais permettant de déterminer les valeurs des propriétés physiques recherchées de l'échantillon à tester.

La matrice 30 de pondération et de biais est une matrice possédant autant de lignes que de variables et autant de colonnes que de propriétés physiques recherchées. La matrice est appliquée à un vecteur dont les composantes sont les variables. Ce vecteur est appelé : « vecteur varaible ». L'application de la matrice au vecteur variable donne un « vecteur résultat » dont les composantes sont des valeurs des propriétés physiques recherchées. Les valeurs des propriétés physiques peuvent varier de façon continue dans une plage de valeur. Les différentes composantes du vecteur résultat peuvent être analysées indépendamment les unes des autres, chaque composante étant représentative d'une des propriétés recherchées.

La figure 2 illustre l'application de cette matrice à un échantillon scanné par le dispositif 10. On recherche dans l'échantillon à tester une proportion de deux matériaux mélangés. Il peut par exemple s'agir de la recherche du taux de gras contenu dans une viande. Le détecteur 20 est un détecteur linéaire comprenant plusieurs pixels sensibles. Chaque pixel permet de mesurer un spectre du rayonnement X. Plus précisément, pour chaque pixel, on obtient une mesure de flux de photons dans chaque canal. A un instant donné, le rayonnement transmis 22 traverse une section de l'échantillon à tester. Cet échantillon se déplace sur le tapis roulant 12. La mesure de spectre effectuée par chaque pixel est répétée en cadence de façon à obtenir une série de mesures dans la direction d'acquisition pour différentes section de l'échantillon à tester.

Après calcul des variables, on obtient une image 32 en trois dimensions de l'échantillon à tester. Les différents pixels du détecteur linéaire forment une première dimension. Les variables calculées forment une deuxième dimension et la direction d'acquisition forme la troisième dimension. Avec un détecteur en deux dimensions, il est possible de réaliser de façon instantanée des mesures le long de la direction d'acquisition. Dans l'image 32, cette direction correspond alors au temps ligne nécessaire à la lecture des mesures faites par le détecteur. A l'aide d'un détecteur en deux dimensions, il est également possible de prévoir un déplacement de l'échantillon à tester par exemple sur un tapis roulant 12. Les mesures réalisées sont alors redondées par plusieurs pixels s'étendant le long de la direction d'acquisition. Il est possible de calculer des moyennes sur les différentes mesures redondées afin de réduire le bruit sur les meures.

A cette image 32 est appliquée la matrice 30 pour obtenir deux images en deux dimensions 34 et 36 correspondant chacune à la valeur de chacune d'une des deux caractéristiques recherchées, à savoir la quantité de matériau de chacun des matériaux recherchés. Plus généralement, l'application de la matrice 30 permet d'obtenir autant d'image que de propriétés physiques recherchées. Pour les deux images 34 et 36, les différents pixels du détecteur linéaire forment une première dimension et la direction d'acquisition forme la seconde dimension. Chaque point de l'image 34 donne par exemple une valeur d'épaisseur d'un premier matériau présente selon une direction du flux de photon. Il en est de même pour l'image 36 pour un second matériau.

Lorsqu'on recherche un taux d'un matériau dans un autre, par exemple un taux de gras, il est possible de calculer pour les points correspondant de chaque image 34 et 36 une moyenne pondérée par des coefficient définis de façon empirique, par exemple à partir de plusieurs échantillons réels dont le taux de gras est déterminé par une autre méthode éventuellement destructive comme par exemple la méthode d'extraction Soxhlet.

Plus précisément, dans le cas d'un taux de gras ou d'un pourcentage d'un premier matériau dans un second, il est possible d'utiliser l'équation suivante :

$$Taux\ de\ gras = \frac{Epaisseur1 \times Paramètre1 \times \rho1 + Epaisseur2 \times Paramètre2 \times \rho2}{Epaisseur1 \times \rho1 + Epaisseur \times \rho2} \quad (Equation\ 2)$$

Dans l'équation 2 :

- Epaisseur 1 et Epaisseur 2 représentent l'épaisseur équivalente dans chacun des deux matériaux,
- $\rho1$ et $\rho2$ représentent la masse volumique ou la densité de chacun des deux matériaux,
- Paramètre1 et Paramètre2 sont des paramètres définies de façon empirique.

Dans une mesure de taux de gras d'une viande, les deux matériaux peuvent être le gras et la viande maigre. Alternativement, même pour une mesure de taux de gras, il est possible de décomposer les mesures réalisées selon des épaisseurs de matériaux prédéfinis autres que le gras et la viande maigre. L'équation 2 permet de calculer le taux de gras, à partir des épaisseurs déterminées dans ces deux matériaux.

Pour déterminer un taux d'un premier matériau dans un second, il est possible de calibrer le procédé en recourant à des échantillons de calibrage formés par exemple dans chacun des deux matériaux purs ou en proportion différentes et connues pour calibrer le procédé. Par exemple pour un taux de gras dans une viande, il est possible d'utiliser deux viandes possédant des taux de gras différents et connus.

Alternativement, il est possible de recourir à d'autres matériaux représentatifs des matériaux recherchés. Par exemple, pour la mesure de taux de gras il est possible d'utiliser le polyoxyméthylène (POM) dont le taux de gras équivalent est 49% et l'eau dont le taux de gras équivalent est 2%. L'utilisation de ces deux matériaux présente l'avantage de leur stabilité de composition et donc de leur stabilité d'équivalence par rapport aux matériaux recherchés.

L'invention permet de déterminer toute valeur intermédiaire de taux de gras entre les taux de gras réels ou équivalents des échantillons de calibrage. Il est également possible d'extrapoler des valeurs à l'extérieur de l'intervalle défini par les échantillons de calibrage. De façon plus générale, chaque composante du vecteur résultat peut varier de façon continue dans une plage.

De plus, le nombre de propriétés physiques recherchées, c'est-à-dire le nombre de composantes du vecteur résultat, peut être différent du nombre d'échantillons de calibrage. Par exemple pour la détermination d'un taux de gras, formant ici la seule propriété physique recherchée, au moins deux échantillons de calibrage sont mis en oeuvre.

L'épaisseur des matériaux intervient dans les mesures. Plus précisément, plus l'épaisseur est importante, plus le nombre de photons transmis diminue. Pour déterminer un taux d'un matériau dans un autre, pour un échantillon à tester, il est possible de se baser sur des échantillons de calibrage ayant la même épaisseur que l'échantillon à tester. Cependant, cela nécessite soit de recalibrer le procédé avec de nouveaux échantillons de calibrage en fonction de l'épaisseur de l'échantillon à tester soit d'imposer une épaisseur précise pour l'échantillon à tester, ce qui est très contraignant.

L'invention permet de dépasser cette contrainte en réalisant une calibration à partir d'échantillons de calibrage de différentes épaisseurs et de différents matériaux par exemple du polyéthylène (PE) et du polychlorure de vinyle (PVC). L'invention n'est pas limitée à deux propriétés différentes. Le nombre de propriétés recherchées n'est pas lié au nombre de matériaux de calibrage. Le nombre de propriétés que l'on peut discerner dépend des limites physiques du détecteur et du type de rayonnement utilisé.

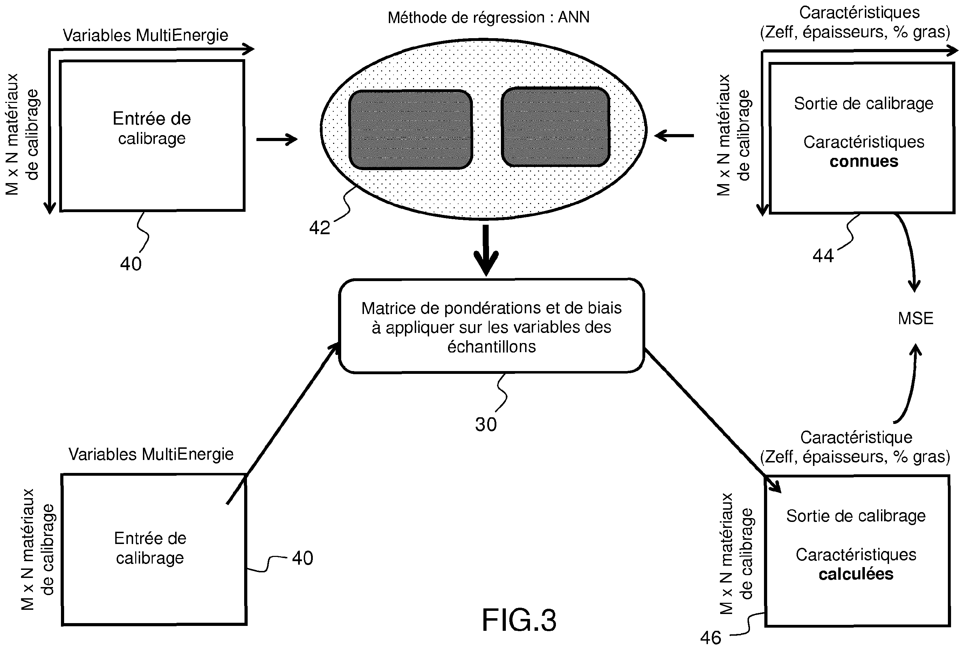

La figure 3 illustre un exemple de réalisation d'une telle calibration. Pour chaque matériau de calibrage et pour plusieurs épaisseurs, on réalise des mesures dans tous les canaux. Par exemple pour le premier matériau de calibrage, on réalise M échantillons d'épaisseurs différentes et pour le second matériau de calibrage on réalise N échantillons d'épaisseurs différentes. On empile chacun des échantillons du premier matériau avec chacun des échantillons du second matériau, Pour chacun des empilages, on réalise une mesure sur chacun des canaux, ce qui donne N x M mesures par canal. Ensuite, pour chacun des empilages, on réalise le calcul des variables. L'ensemble des résultats de ces calculs est regroupé dans une matrice d'entrée de calibrage 40.

Par ailleurs, il est possible de définir une matrice 44, appelée matrice de sortie de calibrage, regroupant les valeurs attendues dans chacune des propriétés recherchées pour chacune des N x M mesures. Dans l'exemple décrit plus haut permettant de connaitre le taux de gras d'une viande, deux matériaux de calibrage sont utilisés : le polyéthylène et le polychlorure de vinyle. La matrice 44 comprend N x M lignes correspondant chacune à un empilage des deux matériaux de calibrage et une colonne définissant un taux de gras équivalent pour chaque empilage. De façon plus générale, la matrice 44 comprend autant de colonne que de propriétés recherchées. Les valeurs attendues peuvent être des valeurs théoriques ou des valeurs mesurées par une autre méthode.

A l'aide d'une méthode de régression 42, on relie les valeurs des variables présentes dans la matrice 40 aux propriétés recherchées de la matrice 44.

La méthode de régression permet d'obtenir la matrice 30 de pondération et de biais. Une méthode de régression utilisable pour passer de la matrice 40 à la matrice 44 est par exemple une méthode non linéaire de réseau de neurone artificielle connue dans la littérature anglo-saxonne par ses initiales ANN et décrite dans le document « Fundamentals of Artificial Neural Networks » de Mohamad H. Hassoun publié en 1995 (MIT press).

Après une première détermination de la matrice 30 de pondération et de biais, il est avantageux de valider cette matrice. La validation peut être réalisée en l'appliquant aux variables présentes dans la matrice 40. On obtient ainsi pour chacun des empilages des valeurs calculées des propriétés recherchées. Ces valeurs calculées sont rangées dans une matrice 46 de même taille que la matrice 44 de valeurs attendues. Il est ensuite possible de comparer les matrices 44 et 46, par exemple en définissant un facteur de mérite MSE (Mean Square Error) à minimiser et défini de la façon suivante dans l'équation 3 :

$$ MSE = \frac{1}{M.N} \sum_{i=1}^{M.N} (Propriété\ attendue_i - Propriété\ calculée_i)^2 $$

La matrice de pondération et de biais 30 est considérée comme valide si le facteur de mérite MSE est inférieur ou égal à un seuil donné, par exemple 1% pour le taux de gras. Si la valeur du facteur de mérite est supérieur au seuil donné, on modifie la combinaison de mesures de différents canaux dans le calcul des variables jusqu'à atteindre la valeur du facteur de mérite souhaité. En d'autres termes, on recherche les meilleures combinaisons entre canaux définissant les variables permettant de minimiser le facteur de mérite.

Alternativement, il est également possible de définir un facteur de mérite à maximiser. Le choix entre une maximisation et une minimisation se fait en fonction de la plus grande simplicité des calculs. Dans le cas d'un facteur de mérite à maximiser (par exemple un facteur maximisant la vraisemblance entre les mesures et les valeurs attendues ou un facteur inverse à l'équation 3) si le facteur de mérite est supérieur ou égal à un seuil donné, la matrice 30 est alors validée. Si au contraire, la valeur du facteur de mérite est inférieur au seuil donné, on modifie la combinaison de mesures de différents canaux dans le calcul des variables jusqu'à atteindre la valeur du facteur de mérite souhaité.

Le calibrage peut être réalisé en usine lors de la fabrication du système 10. Lors de son utilisation, le système peut légèrement évoluer et il est possible de refaire le calibrage périodiquement. L'évolution des mesures réalisées par le système peut provenir d'une utilisation intense provoquant l'échauffement des différents composants du système et notamment du générateur 16. Il est possible d'éviter de refaire une calibration complète telle que décrite plus haut tout en conservant une bonne stabilité des mesures dans le temps. Pour se faire, on corrige les mesures au moyen d'un ou plusieurs échantillons de référence réalisés dans un ou plusieurs matériaux de référence et scannés avec l'échantillon à tester. Le ou les matériaux de référence ou des compositions et des épaisseurs connues. Le ou les matériaux de référence peuvent être identiques aux matériaux de calibrage, mais pas obligatoirement.

Dans le système représenté sur la figure 1, il est possible de placer un échantillon du matériau de référence sur le coté de l'échantillon à tester, en regard de pixels latéraux du détecteur 20 ne se trouvant pas sur le trajet des photons traversant l'échantillon à tester. Ceci permet de réaliser simultanément la mesure utile, c'est-à-dire de l'échantillon à tester et la mesure de référence au travers de ou des échantillons de référence. Cette configuration permet également d'intégrer l'échantillon du matériau de référence dans le dispositif 10. En revanche, ceci impose un détecteur 20 dont la longueur est plus importante que celle de la zone utile dans laquelle se trouve l'échantillon à tester. De plus, les mesures utiles et les mesures de référence ne sont pas effectuées par les mêmes pixels du détecteur.

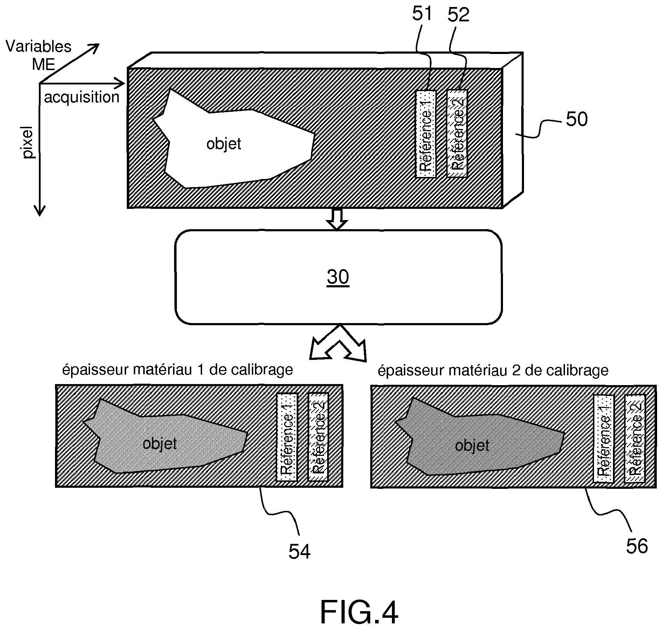

Alternativement, il est possible de disposer le ou les échantillons de référence en amont ou en aval de l'échantillon à tester dans la direction d'acquisition. Cette alternative est illustrée sur la figure 4 sur laquelle on a représenté une image en trois dimensions 50 semblable à l'image 32 dans laquelle deux échantillons de référence 51 et 52 apparaissent. Ces deux échantillons sont réalisés chacun dans un des matériaux de référence utilisés pour déterminer le taux de gras d'une viande, soit deux viandes de taux de gras connu et dans des épaisseurs prédéterminées soit d'autres matériaux équivalents, par exemple de l'eau et du polyoxyméthylène.

On considère que les mesures sur l'échantillon à tester et sur les deux échantillons de référence sont réalisées simultanément ou sensiblement simultanément, si les mesures appartiennent à la même image. Alternativement, il est possible de décaler temporellement, les mesures sur un échantillon à tester et les mesures sur les échantillons de référence. Le décalage temporel est défini en fonction de la stabilité temporelle constatée pour le système. Il est par exemple possible de placer un échantillon de référence périodiquement, après passage de plusieurs échantillons à tester.

A la différence du procédé de calibration complet dans lequel pour chacun des matériaux de calibrage, plusieurs épaisseurs sont analysées, dans le procédé de correction, il est possible de ne mettre en oeuvre qu'un seul matériau de référence. Il est possible de ne prévoir qu'un seul échantillon de référence d'une seule épaisseur ou alternativement, plusieurs échantillons de référence, d'épaisseurs différentes et réalisés dans le même matériau. Le choix du nombre d'échantillons de référence est fait en fonction de la précision souhaitée dans la détermination des propriétés recherchées.

A l'image 50 est appliquée la matrice 30 pour obtenir deux images en deux dimensions 54 et 56 correspondant chacune à la valeur de sortie d'un des deux matériaux de calibrage. Les images 54 et 56 sont semblables aux images 34 et 36 décrites plus haut. Dans les images 54 et 56, on retrouve les valeurs correspondant aux deux échantillons de référence 51 et 52. A l'aide de ces deux images 54 et 56, il est possible d'adapter les paramètres de l'équation 2.

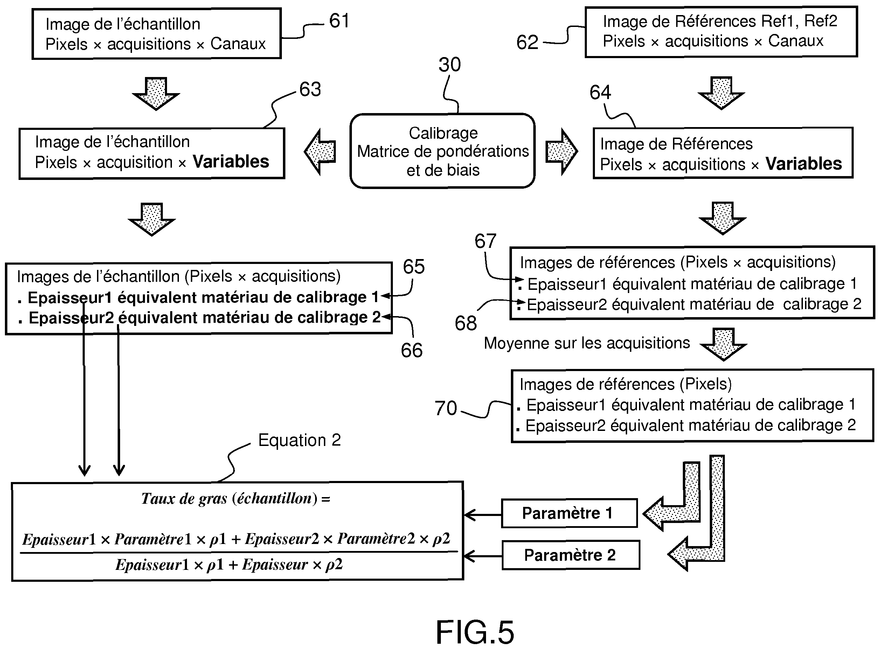

La figure 5 illustre l'adaptation des paramètres réalisée au moyen de deux échantillons de référence, notés Ref1 et Ref2, réalisés dans deux matériaux différents.

Une image en trois dimensions (Pixels, Canaux, Acquisition) est réalisée pour l'échantillon à tester, image 61, et pour les deux échantillons de référence, image 62. En pratique les deux images peuvent être regroupées en une seule. Les combinaisons de canaux sont ensuite réalisées pour obtenir les variables précédemment décrites. On obtient ainsi une image en trois dimensions (Pixels, Variables, Acquisition) pour l'échantillon à tester, image 63, et pour les deux échantillons de référence, image 64. Sur la figure 4, l'image 50 regroupe les deux images 63 et 64. Au moyen de la matrice de pondération et de biais 30, on calcule, pour l'échantillon à tester, deux images en deux dimensions (Pixel, Acquisition) 65 et 66 donnant l'épaisseur équivalente de l'échantillon à tester dans chacun des deux matériaux de calibrage. La même opération est réalisée pour les deux matériaux de référence pour obtenir deux images en deux dimensions (Pixel, Acquisition) 67 et 68 donnant l'épaisseur équivalente des échantillons de référence Ref1 et Ref2 dans chacun des deux matériaux de calibrage.

Ensuite, pour les images 67 et 68, une moyenne sur les acquisitions est réalisée afin de réduire le bruit sur les mesures. Cette moyenne sur les acquisitions est donnée au cadre 70. On peut conserver des valeurs d'épaisseurs équivalentes distinctes pour chaque pixel du détecteur 20 et rechercher ensuite des paramètres adaptés à chacun des pixels. Alternativement, pour simplifier les calculs, on peut faire une moyenne sur tous les pixels et rechercher ensuite des paramètres communs à l'ensemble du détecteur 20.

A partir des propriétés connues pour chacun des échantillons de référence Ref1 et Ref2, il est possible de retrouver les paramètres en résolvant les deux équations 4 et 5 dérivées de l'équation 2.

Equation 4 :

$$Ref1\,(\%) = \frac{Epaisseur1(Ref1) \times Param\grave{e}tre1 \times \rho1 + Epaisseur2(Ref1) \times Param\grave{e}tre2 \times \rho2}{Epaisseur1(Ref1) \times \rho1 + Epaisseur2(Ref1) \times \rho2}$$

Equation 5 :

$$Ref2(\%) = \frac{Epaisseur1(Ref2) \times Param\grave{e}tre1 \times \rho1 + Epaisseur2(Ref2) \times Param\grave{e}tre2 \times \rho2}{Epaisseur1(Ref2) \times \rho1 + Epaisseur2(Ref2) \times \rho2}$$

Dans les équations 4 et 5 :

- Epaisseur1 (Ref1) et Epaisseur1 (Ref2) sont des mesures des épaisseurs équivalentes des matériaux de référence dans le premier matériau de calibrage,
- Epaisseur 2(Ref1), Epaisseur 2(Ref2) sont des mesures des épaisseurs équivalentes des matériaux de référence dans le second matériau de calibrage,
- $\rho1$ et $\rho2$ sont les densités des matériaux de calibrage 1 et 2.
- Ref1 (%) et Ref2(%) sont par exemple des estimations de taux de gras des matériaux de références.

La résolution des équations 4 et 5, dont les inconnues sont Paramètre1 et Paramètre2, permet de réintroduire ces paramètres dans l'équation 2 afin de déterminer pour l'échantillon à tester son taux de gras et plus généralement les proportions d'un matériau dans un autre.

Dans l'adaptation des paramètres illustrée à l'aide de la figure 5, on considère que les deux paramètres ne varient pas en fonction de l'épaisseur équivalente dans chacun des matériaux de calibrage. Dans la pratique, on a cependant constaté que pour déterminer plus finement la proportion d'un matériau par rapport à l'autre, il est utile de faire évoluer la valeur des paramètres en fonction de l'épaisseur équivalente déterminée à l'aide des images 34 et 36.

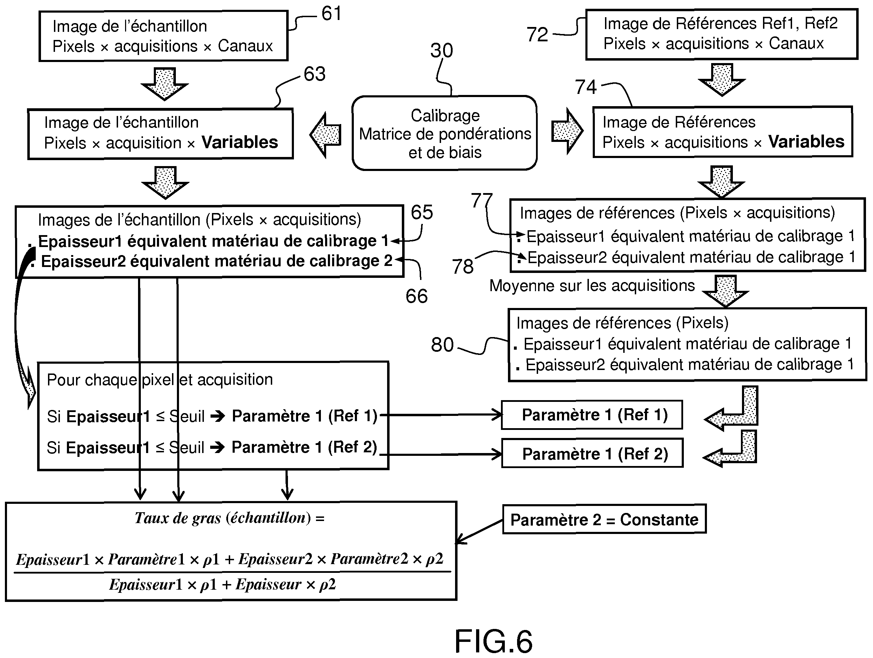

La figure 6 illustre un procédé que l'on peut mettre en oeuvre pour cette adaptation de valeur d'un paramètre. Pour simplifier la compréhension, on considère qu'un des paramètres est figé, le paramètre2 dans l'exemple représenté. Il est bien sûr possible d'adapter le procédé de la figure 6 pour tous les paramètres.

On retrouve figure 6, pour l'échantillon à tester les images 61, 63, 65 et 66. On rappelle notamment que l'image 65 donne l'épaisseur équivalente de l'échantillon à tester dans le premier matériau de calibrage. A la différence du procédé illustré à l'aide de la figure 5, dans le procédé illustré à l'aide de la figure 6, les deux échantillons de référence sont réalisés dans un même matériau qui peut être l'un des matériaux de calibrage mais pas obligatoirement. De façon plus générale, les deux échantillons de référence donnent la même mesure d'une propriété recherchée commune. A la différence de la figure 5, dans la figure 6, les deux échantillons de référence possèdent des épaisseurs prédéterminées distinctes. Sur la figure 6, apparaissent : une image 72 en trois dimensions (Pixels, Canaux, Acquisition) pour les deux échantillons de référence ainsi que deux images en deux dimensions (Pixel, Acquisition) 77 et 78 donnant l'épaisseur équivalente de chacun des échantillons de référence dans le premier matériau de calibrage.

Ensuite, pour les images 77 et 88, une moyenne sur les acquisitions est réalisée afin de réduire le bruit sur les mesures. Cette moyenne sur les acquisitions est donnée au cadre 80. Comme précédemment, on peut conserver des valeurs d'épaisseurs équivalentes distinctes pour chaque pixel du détecteur 20 ou faire une moyenne sur tous les pixels et rechercher ensuite des paramètres communs à l'ensemble du détecteur 20.

A partir de la propriété commune aux deux échantillons de référence, notée Ref(%), il est possible de retrouver deux valeurs du paramètre adaptées à chacune des deux épaisseurs de chacun des deux échantillons de référence. Pour le premier échantillon de référence, noté Ref1 et des épaisseurs : Epaisseur1 (Ref1), Epaisseur2(Ref1), le paramètre, noté : Paramètre1 (Ref1) est calculé avec l'équation 6 :

$$Ref(\%) = \frac{Epaisseur1(Ref1) \times Param\grave{e}tre1(Ref1) \times \rho1 + Epaisseur2(Ref1) \times Param\grave{e}tre2 \times \rho2}{Epaisseur1(Ref1) \times \rho1 + Epaisseur2(Ref1) \times \rho2}$$

Pour le second échantillon de référence noté Ref2 et des épaisseurs : Epaisseur1 (Ref2) et Epaisseur2(Ref2), le paramètre, noté : Paramètre1 (Ref2), est calculé avec l'équation 7 :

$$Ref\,(\%) = \frac{Epaisseur1(Ref2) \times Param\grave{e}tre1(Ref2) \times \rho1 + Epaisseur2(Ref2) \times Param\grave{e}tre2 \times \rho2}{Epaisseur1(Ref2) \times \rho1 + Epaisseur2(Ref2) \times \rho2}$$

Les deux paramètres Paramètre1 (Ref1) et Paramètre1 (Ref2) sont ensuite exploités dans l'équation 2 afin de déterminer pour l'échantillon à tester son taux de gras et plus généralement les proportions d'un matériau dans un autre.

A partir de l'image 65 donnant l'épaisseur équivalente de l'échantillon à tester dans le premier matériau recherché, il est possible de définir un seuil d'épaisseur en-deçà duquel on utilise l'une des valeurs du paramètre, par exemple Paramètre1 (Ref1), et au-delà duquel on utilise l'autre valeur du paramètre, Paramètre1 (Ref2). Le seuil d'épaisseur est par exemple égal à la moyenne des épaisseurs des deux échantillons de référence Ref1 et Ref2.

Cette utilisation de deux valeurs distinctes du paramètre est adaptée si les deux valeurs sont voisines. Alternativement, il est possible de faire varier linéairement la valeur du paramètre en fonction de l'épaisseur définie à l'image 65. La variation du paramètre est alors définie au moyen des deux valeurs du paramètre. Il est possible d'utiliser plus de deux échantillons de référence de même matériaux et d'épaisseur distinctes et d'utiliser une régression, par exemple polynomiale, pour définir une loi de variation de la valeur du paramètre.

## Revendications

1. Procédé de détermination de propriétés physiques d'un échantillon à tester (14) mettant en oeuvre un détecteur spectrométrique (20) à rayons X ou gamma à au moins trois canaux, comprenant des étapes consistant à :

   réaliser des mesures dans chacun des canaux sur plusieurs échantillons de calibrage, chaque échantillon de calibrage étant formé d'un empilage d'échantillons de différentes épaisseurs et de différents matériaux,
   calculer des variables pour chacun des échantillons de calibrage, chaque variable étant formée d'une combinaison associée de mesures de différents canaux,
   lors d'une première étape de calibration, définir une matrice de pondération et de biais (30) à l'aide d'une méthode de régression, la matrice de pondération et de biais (30) reliant les variables relatives aux échantillons de calibrage à des valeurs attendues des propriétés recherchées des échantillons de calibrage,

   réaliser des mesures dans chacun des canaux sur l'échantillon à tester, calculer les variables pour l'échantillon à tester, chaque variable étant formée de la combinaison associée des mesures de différents canaux, et déterminer des valeurs des propriétés physiques de l'échantillon à tester en appliquant aux variables obtenues pour l'échantillon à tester la matrice de pondération et de biais (30), les valeurs des propriétés physiques pouvant varier de façon continue.

2. Procédé selon la revendication 1, **caractérisé en ce que** les variables forment un vecteur variable et **en ce que** l'application de la matrice de pondération et de biais (30) au vecteur variable donne un vecteur résultat dont les composantes sont les valeurs des propriétés physiques recherchées.

3. Procédé selon l'une des revendications précédentes, **caractérisé en ce que** les variables sont normalisées au moyen d'un rapport entre des mesures utiles d'un rayonnement atténué par l'échantillon et des mesures à vide du rayonnement non atténué par l'échantillon.

4. Procédé selon la revendication 3, **caractérisé en ce que** les variables sont normalisées au moyen d'un logarithme du rapport.

5. Procédé selon la revendication 1, comprenant en outre des étapes consistant à :

   • lors d'une deuxième étape de calibration, appliquer aux variables relatives aux échantillons de calibrage (40), la matrice de pondération et de biais (30) pour obtenir des valeurs calculées (46) des propriétés des échantillons de calibrage, et calculer un facteur de mérite (MSE) à minimiser, relatif à un écart entre les valeurs calculées (46) des propriétés des échantillons de calibrage et les valeurs attendues (44) des propriétés des échantillons de calibrage, et
   • si la valeur du facteur de mérite (MSE) est inférieure ou égale à un seuil prédéterminé, valider la matrice de pondération et de biais (30),
   • si la valeur du facteur de mérite (MSE) est supérieure au seuil, modifier la combinaison de mesure des différentes variables, puis refaire la première et la deuxième étape de calibration jusqu'à ce que la valeur du facteur de mérite (MSE) soit inférieure ou égale au seuil.

6. Procédé selon la revendication 1, comprenant en outre des étapes consistant à :

• lors d'une deuxième étape de calibration, appliquer aux variables relatives aux échantillons de calibrage (40), la matrice de pondération et de biais (30) pour obtenir des valeurs calculées (46) des propriétés des échantillons de calibrage, et calculer un facteur de mérite (MSE) à maximiser, relatif à un écart entre les valeurs calculées (46) des propriétés des échantillons de calibrage et les valeurs attendues (44) des propriétés des échantillons de calibrage, et
• si la valeur du facteur de mérite (MSE) est supérieure ou égale à un seuil prédéterminé, valider la matrice de pondération et de biais (30),
• si la valeur du facteur de mérite (MSE) est inférieure au seuil, modifier la combinaison de mesure des différentes variables, puis refaire la première et la deuxième étape de calibration jusqu'à ce que la valeur du facteur de mérite (MSE) soit inférieure ou égale au seuil.

7. Procédé selon l'une des revendications précédentes,

• dans lequel la détermination des propriétés physiques recherchées fait appel à au moins un paramètre,
• et dans lequel le au moins un paramètre est adapté à l'aide de mesures réalisées dans chacun des canaux sur un échantillon de référence d'épaisseur prédéterminée et dont au moins une propriété recherchée est connue.

8. Procédé selon la revendication 7,

• dans lequel les mesures de l'échantillon de référence sont réalisées simultanément avec des mesures sur un échantillon à tester,
• et dans lequel, le paramètre est adapté pour la détermination des propriétés physiques recherchées de l'échantillon à tester.

9. Procédé selon l'une des revendications 7 ou 8,

• dans lequel l'au moins un paramètre est adapté à l'aide de mesures réalisées dans chacun des canaux sur deux échantillons de référence permettant de délivrer une même mesure d'une des propriétés recherchées et possédant des épaisseurs prédéterminées et distinctes,
• et dans lequel le paramètre peut prendre deux valeurs distinctes fonction d'une épaisseur équivalente dans un matériau possédant la propriété recherchée commune aux deux échantillons de référence.

**Patentansprüche**

1. Verfahren zur Bestimmung der physikalischen Eigenschaften einer Testprobe (14), bei dem ein spektrometrischer Röntgen- oder Gammastrahlendetektor (20) mit mindestens drei Kanälen eingesetzt wird, umfassend die folgenden Schritten:

Durchführen von Messungen in jedem der Kanäle an mehreren Kalibrierungsproben, wobei jede Kalibrierungsprobe aus einem Stapel von Proben unterschiedlicher Dicke und aus unterschiedlichen Materialien gebildet wird, Berechnen von Variablen für jede der Kalibrierungsproben, wobei jede Variable aus einer zugeordneten Kombination von Messungen aus unterschiedlichen Kanälen gebildet wird, in einem ersten Kalibrierungsschritt Definieren einer Gewichtungs- und Verzerrungsmatrix (30) mithilfe einer Regressionsmethode, wobei die Gewichtungs- und Verzerrungsmatrix (30) die Variablen bezüglich der Kalibrierungsproben mit erwarteten Werten der gesuchten Eigenschaften der Kalibrierungsproben verbindet, Durchführen von Messungen in jedem der Kanäle an der zu testenden Probe, Berechnen der Variablen für die zu testende Probe, wobei jede Variable aus der zugehörigen Kombination der Messungen verschiedener Kanäle gebildet wird, und Bestimmen von Werten der physikalischen Eigenschaften der zu testenden Probe durch Anwenden der Gewichtungs- und Verzerrungsmatrix (30) auf die für die zu testende Probe erhaltenen Variablen, wobei die Werte der physikalischen Eigenschaften sich kontinuierlich ändern können.

2. Verfahren nach Anspruch 1, **dadurch gekennzeichnet, dass** die Variablen einen variablen Vektor bilden und dass die Anwendung der Gewichtungs- und Verzerrungsmatrix (30) auf den variablen Vektor einen Ergebnisvektor ergibt, dessen Komponenten die Werte der gesuchten physikalischen Eigenschaften sind.

3. Verfahren nach einem der vorhergehenden Ansprüche, **dadurch gekennzeichnet, dass** die Variablen mittels eines Verhältnisses zwischen Nutzmessungen von durch die Probe abgeschwächter Strahlung und Leermessungen von durch die Probe nicht abgeschwächter Strahlung normalisiert werden.

4. Verfahren nach Anspruch 3, **dadurch gekennzeichnet, dass** die Variablen mithilfe eines Logarithmus des Verhältnisses normalisiert werden.

5. Verfahren nach Anspruch 1, das außerdem die folgenden Schritte umfasst:

• in einem zweiten Kalibrierungsschritt, Anwenden der Gewichtungs- und Verzerrungsmatrix (30) auf die Variablen der Kalibrierungsproben (40), um berechnete Werte (46) der Eigenschaften der Kalibrierungsproben zu erhalten, und Berechnen eines zu minimierenden Leistungsfaktors (MSE), der sich auf eine Abweichung zwischen den berechneten Werten (46) der Eigenschaften der Kalibrierungsproben und den erwarteten Werten (44) der Eigenschaften der Kalibrierungsproben bezieht, und
• falls der Wert des Verdienstfaktors (MSE) kleiner oder gleich einem vorbestimmten Schwellenwert ist, Validieren der Gewichtungs- und Verzerrungsmatrix (30),
• falls der Wert des Leistungsfaktors (MSE) über dem Schwellenwert liegt, ändern der Messkombination der verschiedenen Variablen und dann wiederholen des ersten und zweiten Kalibrierungsschritts, bis der Wert des Leistungsfaktors (MSE) kleiner oder gleich dem Schwellenwert ist.

6. Verfahren nach Anspruch 1, das außerdem die folgenden Schritte umfasst:

• in einem zweiten Kalibrierungsschritt, Anwenden der Gewichtungs- und Verzerrungsmatrix (30) auf die Variablen der Kalibrierungsproben (40), um berechnete Werte (46) der Eigenschaften der Kalibrierungsproben zu erhalten, und Berechnen eines zu maximierenden Leistungsfaktors (MSE), der sich auf eine Abweichung zwischen den berechneten Werten (46) der Eigenschaften der Kalibrierungsproben und den erwarteten Werten (44) der Eigenschaften der Kalibrierungsproben bezieht, und
• falls der Wert des Leistungsfaktors (MSE) größer oder gleich einem vorbestimmten Schwellenwert ist, Validieren der Gewichtungs- und Verzerrungsmatrix (30),
• falls der Wert des Leistungsfaktors (MSE) unter dem Schwellenwert liegt, ändern der Messkombination der verschiedenen Variablen und dann wiederholen des ersten und zweiten Kalibrierungsschritts, bis der Wert des Leistungsfaktors (MSE) unter dem Schwellenwert liegt oder gleich dem Schwellenwert ist.

7. Verfahren nach einem der vorhergehenden Ansprüche,

• bei dem zur Bestimmung der gesuchten physikalischen Eigenschaften mindestens ein Parameter herangezogen wird,
• und wobei der mindestens eine Parameter mithilfe von Messungen angepasst wird, die in jedem der Kanäle an einer Referenzprobe mit einer vorbestimmten Dicke durchgeführt werden, von der mindestens eine gesuchte Eigenschaft bekannt ist.

8. Verfahren nach Anspruch 7,

• bei dem die Messungen der Referenzprobe gleichzeitig mit Messungen an einer zu testenden Probe durchgeführt werden,
• und wobei der Parameter zur Bestimmung der gewünschten physikalischen Eigenschaften der zu testenden Probe geeignet ist.

9. Verfahren nach einem der Ansprüche 7 oder 8,

• wobei der mindestens eine Parameter mit Hilfe von Messungen angepasst wird, die in jedem der Kanäle an zwei Referenzproben durchgeführt werden, die es ermöglichen, eine gleiche Messung einer der gesuchten Eigenschaften zu liefern, und die vorbestimmte und unterschiedliche Dicken besitzen,
• und wobei der Parameter zwei verschiedene Werte annehmen kann, die von einer äquivalenten Dicke in einem Material abhängen, das die gesuchte Eigenschaft besitzt, die den beiden Referenzproben gemeinsam ist.

**Claims**

1. A method for determining physical properties of a test sample (14) using an X-ray or gamma-ray spectrometric detector (20) with at least three channels, the method comprising steps of:

   performing measurements in each of the channels on a plurality of calibration samples, each calibration sample being formed from a stack of samples with different thicknesses and different materials,
   calculating variables for each of the calibration samples, each variable being formed from an associated combination of measurements of different channels,
   during a first calibration step, defining a weighting and bias matrix (30) using a regression method, the weighting and bias matrix (30) linking the variables relative to the calibration samples to expected values of the sought properties of the calibration samples,
   performing measurements in each of the channels on the test sample, calculating the variables for the test sample, each variable being formed from the associated combination of the measurements of different channels,
   and determining values of the physical properties of the test sample by applying the weighting and bias matrix (30) to the variables obtained for the test sample, the values of the physical properties being able to vary continuously.

2. The method according to claim 1, **characterized in that** the variables form a variable vector, and **in that** the application of the weighting and bias matrix (30) to the variable vector yields a result vector, the components of which are the sought values of the physical properties.

3. The method according to one of the preceding claims,
   **characterized in that** the variables are normalized using a ratio between useful measurements of radiation attenuated by the sample and empty measurements of the radiation not attenuated by the sample.

4. The method according to claim 3, **characterized in that** the variables are normalized using a logarithm of the ratio.

5. The method according to claim 1, further comprising steps of:

   • during a second calibration step, applying the weighting and bias matrix (30) to the variables relative to the calibration samples (40) to obtain calculated values (46) of the properties of the calibration samples, and to calculate a figure of merit (MSE) to be minimized, relative to a deviation between the calculated values (46) of the properties of the calibration samples and the expected values (44) of the properties of the calibration samples, and
   • if the value of the figure of merit (MSE) is less than or equal to a predetermined threshold, validating the weighting and bias matrix (30),
   • if the value of the figure of merit (MSE) is greater than the threshold, modifying the combination of the measurements of the different variables, then repeating the first and second calibration steps until the value of the figure of merit (MSE) is less than or equal to the threshold.

6. The method according to claim 1, further comprising steps of:

   • during a second calibration step, applying the weighting and bias matrix (30) to the variables relative to the calibration samples (40) to obtain calculated values (46) of the properties of the calibration samples, and to calculate a figure of merit (MSE) to be maximized, relative to a deviation between the calculated values (46) of the properties of the calibration samples and the expected values (44) of the properties of the calibration samples, and
   • if the value of the figure of merit (MSE) is greater than or equal to a predetermined threshold, validating the weighting and bias matrix (30),
   • if the value of the figure of merit (MSE) is less than the threshold, modifying the combination of the measurements of the different variables, then repeating the first and second calibration steps until the value of the figure of merit (MSE) is less than or equal to the threshold.

7. The method according to one of the preceding claims,

   • wherein determining the sought physical properties involves at least one parameter,
   • and wherein the at least one parameter is suitable for assisting with measurements carried out in each of the channels on a reference sample of a predetermined thickness and of which at least one sought property is known.

8. The method according to claim 7,

   • wherein the measurements of the reference sample are carried out simultaneously with measurements on a test sample,
   • and wherein the parameter is suitable for determining the sought physical properties of the test sample.

9. The method according to one of claims 7 or 8,

   • wherein the at least one parameter is suitable for assisting with measurements carried out in each of the channels on two reference samples, making it possible to deliver a single measurement of one of the sought properties and having predetermined and different thicknesses,
   • and wherein the parameter can assume two different values depending on an equivalent thickness in a material having the sought property shared by the two reference samples.

FIG.1

FIG.2

FIG.3

Méthode de régression : ANN

Variables MultiEnergie

M x N matériaux de calibrage — Entrée de calibrage — 40

Caractéristiques (Zeff, épaisseurs, % gras)

M x N matériaux de calibrage — Sortie de calibrage — Caractéristiques **connues** — 44

42

Matrice de pondérations et de biais à appliquer sur les variables des échantillons — 30

MSE

Variables MultiEnergie

M x N matériaux de calibrage — Entrée de calibrage — 40

Caractéristique (Zeff, épaisseurs, % gras)

M x N matériaux de calibrage — Sortie de calibrage — Caractéristiques **calculées** — 46

EP 3 635 377 B1

FIG.4

FIG.5

FIG.6

EP 3 635 377 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130110438 A1
- WO 2017006059 A1
- WO 2015091083 A1

**Littérature non-brevet citée dans la description**

- **MOHAMAD H. HASSOUN.** Fundamentals of Artificial Neural Networks. MIT press, 1995